# EUROPEAN PATENT SPECIFICATION

(11) **EP 0 982 209 B1**
(45) Date of publication and mention of the grant of the patent: **25.04.2001**
(21) Application number: 99104427.2
(22) Date of filing: 01.03.1999
(51) Int. Cl.: B60T 13/66, B60T 17/22

(54) **A braking system, in particular for trains with high composition**
Bremssystem, insbesondere für sehr lange Züge
Dispositif de freinage, en particulier pour des trains de grande longueur

(30) Priority: 28.08.1998 IT TO980726
(43) Date of publication of application: 01.03.2000
(73) Proprietor: SAB WABCO S.p.A., I-10045 Piossasco (Torino) (IT); Alstom Transport S.A., 75116 Paris (FR)
(72) Inventor: Barberis, Dario c/o Sab Wabco Spa, 10045 Piossasco (IT); Tione, Roberto c/o Sab Wabco Spa, 10045 Piossasco (IT)
(74) Representative: Marchitelli, Mauro

(56) References cited:
- WO-A-98/09857
- US-A- 5 503 467
- US-A- 5 638 276
- US-A- 5 722 736
- US-A- 5 730 504
- US-A- 5 746 484

## Description

The present invention relates to an air braking system according to the preamble of claim 1, in particular for very long trains.

The invention has been developed in particular in view of the application on goods trains longer than one kilometre but the invention can be equally applied also on trains considerably shorter, such as passenger trains.

The braking system most used at international level is based on the operating principle of the Westinghouse air brake. This braking system comprises a compressed air main reservoir placed on the locomotive and fed by a compressor at a reference pressure of 5 bar.- A brake pipe starts from the main reservoir and extends along all the vehicles of the train. A control cock placed on the locomotive allows the pressure in the brake pipe to be reduced with respect to the reference pressure and a plurality of braking apparatus placed on the various vehicles of the train produce a braking force correlated to the difference between the pressure in the brake pipe and the reference pressure.

In braking systems of known type the brake pipe carries out both the function of transmitting to the vehicles the energy necessary for activating the brakes and the function of transmitting the braking command. The energy is accumulated in a plurality of auxiliary reservoirs placed on the various vehicles which are filled at a pressure equal to the reference pressure of the brake pipe. The braking command is given by reducing the pressure in the brake pipe. A distributor is provided on each vehicle, which puts the auxiliary reservoir in communication with brake actuating cylinders when the pressure in the brake pipe falls below the reference pressure (which is usually 5 bar).

With a braking system of this type, very long trains (including more than one hundred vehicles) can be controlled only at a very low speed. Goods trains longer than one kilometre typically have a maximum speed of about 40 km/h and this limit is due to the fact that, among other things, the previously disclosed braking system is insufficient and the train becomes practically uncontrollable during braking with higher speed.

WO-A-98/09857 discloses a braking system having the features of the pre-characterising portion of claim 1. This document discloses an electropneumatic brake control valve unit capable of operating at the interface of the emergency brake portion or the service brake portion of a standard brake control valve as retrofit unit or operating as a stand alone electropneumatic unit. The unit includes electric valves responsive to electrical signals and sensed brake pipe pressures to operate pneumatic valves to control the brake cylinder. The pneumatic valves are also operable independent of electric control valves so as to allow braking with the electrical control off or disabled.

The present invention relates to a braking system having the features forming the subject of the main claim.

The present invention is essentially based on the idea of using, in addition to a standard braking system, which remains essentially the same, a new braking system which preferably operates with a higher pressure in the brake pipe and, consequently, in the various auxiliary reservoirs (for instance 7 bar). When the braking system operates at a pressure higher than the present standards, the control reservoirs of the various distributors installed on the vehicles of the train are all filled at a pressure lower than the normal operating pressure of the brake pipe (for instance at 5.4 bar). When the pressure in the brake pipe falls below the pressure in the control reservoirs, the distributor behaves like a normal pneumatic distributor of the type compliant to U.I.C. standards and sends to the brake cylinders a control pressure proportional to the difference between the pressure in the brake pipe and the reference pressure in the control reservoirs of the distributors. However, when the pressure in the brake pipe is higher than the pressure in the control reservoirs, a pneumatically controlled section of the distributors is cut-off on each vehicle and braking is controlled by an electrically controlled section of the distributors which receives via radio or via serial bus the braking commands.

In a different application, the pressure in the brake pipe can be maintained at the value prescribed by U.I.C. standards. Also in this case, the braking is controlled by the electrically controlled section of the distributors and in this case the pneumatically controlled section does never become operative. The braking system is fully compatible with present standards and, in case of failure of the electrically controlled system, it can operate as a normal braking system with air control. In normal operating conditions, the braking system according to the invention is characterized by a much faster propagation of the brake command along the train and by reaction times of the braking system considerably faster. This permits the train to travel at speeds considerably higher and the braking system does not render the train uncontrollable.

Further characteristics and advantages of the system according to the invention will become clear in the course of the detailed description which follows, given purely by way of non-limiting example, with reference to the attached drawings, in which:
- figure 1 is a schematic view showing a train provided with a braking system according to the invention,
- figure 2 is a pneumatic diagram showing the operation of a braking control system according to the invention,
- figure 3 is a pneumatic diagram showing a variant of the control system of figure 2,
- figure 4 is a diagram showing the control assembly aboard the locomotive, associated with a braking system according to the invention,
- figure 5 is a diagram showing the battery charging assembly which powers the electrically controlled section of the distributor.

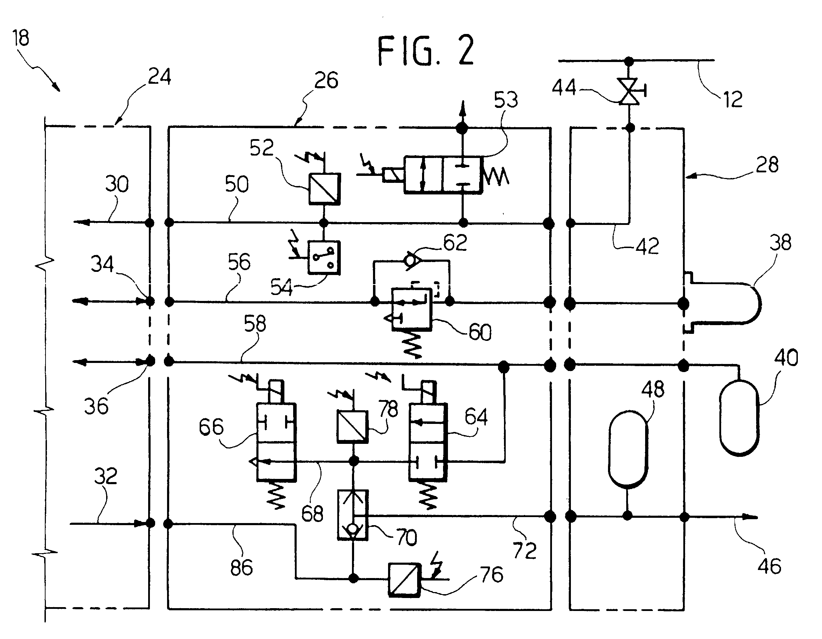

With reference to figure 2, the reference number 10 indicates a train formed by a locomotive M and by a plurality of vehicles coupled to each other, indicated V₁, V₂, V₃, ... Vₙ. In a way per se known, the train 10 is provided with a pneumatic braking system including a brake pipe 12 which extends from the locomotive to the last vehicle of the train. The braking system comprises essentially a main reservoir 14 (dedicated to the braking system) arranged on the locomotive M and connected to the brake pipe 12 by a control cock 16. A braking assembly is arranged on each vehicle V₁, V₂, V₃, ... Vₙ and includes, in a way per se known, a distributor 18 pneumatically connected to the brake pipe 12, to an auxiliary reservoir 40 and to one or more brake cylinders 22 mechanically connected to the brake control linkage.

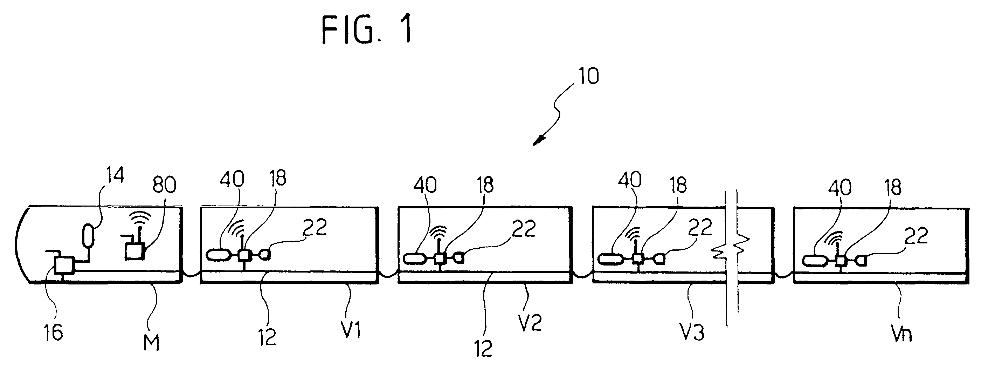

Figure 2 shows a partial pneumatic diagram of a brake control system according to the invention, indicated all together at 18. The control system 18 comprises a pneumatically controlled section 24, an electrically controlled section 26 and a support 28 of the distributor. The pneumatically controlled section 24 performs the same function as a normal pneumatic distributor for railway brakes homologated in accordance with the U.I.C. standards. The pneumatically controlled section 24 has not been shown in detail in the figures in that it is constructively and functionally equivalent to a known pneumatic distributor and its constructive features lie outside the scope of the present invention. The pneumatically controlled section 24, as any U.I.C. standard distributor, has an inlet 30 for the connection to the brake pipe 12 and an outlet 32 for the connection to the brake cylinders 22. The section 24 further comprises two connection points indicated at 34 and 36 for the connection, respectively, to a control reservoir 38 and to an auxiliary reservoir 40. In traditional solutions the pneumatic control section 24 (constructively identical to a U.I.C. standard distributor) is directly connected to the support 28 of the distributor, so that its inlet 30 is connected to the brake pipe 12 by a line 42 and by an on/off valve 44, its outlet 32 is connected to the line 46 which feeds the brake cylinders (on which an accumulator 48 can be branched) and the connection points 34 and 36 are directly connected to the control reservoir 38 and to the auxiliary reservoir 40. The pneumatic control section 24 is realised such that when the pressure in the inlet line 30 is higher than the pressure on the connection point 34, the pressure on the outlet line 32 is zero. When the pressure on the inlet line 30 is lower than the pressure on the connection point 34, in the outlet line 32 there is a braking pressure whose intensity is correlated to the difference between the pressure on the connection point 34 and the pressure on the inlet line 30. In a traditional braking system, the brake pipe 12 is filled at a pressure of 5 bar and the pneumatic distributor fills the control reservoir 38 and the auxiliary reservoir 40 at a pressure substantially equal to the pressure in the brake pipe 12. The braking command is given by operating the control cock 16 placed on the locomotive M (figure 1) which determines a depression which propagates along the brake pipe 12. The depression along the brake pipe forms the braking command. When the distributor detects a drop of pressure in the brake pipe with respect to the pressure existing in the control reservoir 38, it puts the auxiliary reservoir 40 in communication with the line 32 feeding the brake cylinders.

The braking system according to the present invention differs from a standard braking system in that- each control system 18 comprises an electrically controlled section 26. In the embodiment shown in figure 2, the electrically controlled section 26 is carried by an intermediate bracket physically placed between the support 28 of the distributor and the pneumatically controlled section 24. The electrically controlled section 26 comprises a line 30 which puts the inlet fitting 42 of the support 28 of the distributor in communication with the inlet 30 of the pneumatically controlled section 24. An electrically controlled application valve is branched on the line 50. The application valve 53 is normally close and in open condition it puts the line 50 in communication with the atmosphere. A transducer 52 and a pressure switch 54 are also placed on the line 50. The electrically controlled section 26 comprises a second line 56 which connects the connection point 34 of the pneumatically controlled section to the control reservoir 38 and a third line 58 which connects the connection point 36 to the auxiliary reservoir 40. A pressure control valve calibrated at a pressure lower than the pressure in the brake pipe 12 is placed on the line 56. A check valve 62 is connected in parallel to the pressure control valve 60 and enables the passage of a flow of pressurised air directed from the control reservoir 38 to the connection point 34. When it is desired to operate at a pressure in the brake pipe 12 in accordance with the U.I.C. standards, the pressure control valve 60 and the check valve 62 are not necessary. The connection points 34, 36 of the pneumatically controlled section 24 are placed in fluid communication with the inlet line 30, which is in communication with the brake pipe 12. With the shown arrangement, the auxiliary reservoir 40 is filled at a pressure substantially equal to the pressure of the brake pipe 12, whereas the control reservoir 38 is loaded at a pressure equal to the calibrating pressure of the pressure control valve 60.

The braking system according to the present invention is designed for operating with a constant pressure in the brake pipe 12, for instance of 7 bar. The pressure control valve 60 can be calibrated at a value of 5.4 bar. Therefore, the auxiliary reservoir 40 is filled at 7 bar whereas the control reservoir 38 is filled at 5.8 bar.

The braking system can also operate at a pressure in the brake pipe of 5 bar (U.I.C. standards) and in this case both the control reservoir 38 and the auxiliary reservoir 40 are loaded at 5 bar.

The electrically controlled section 26 of the distributor 18 comprises also a brake valve assembly including a brake valve 64, a brake-release valve 66 and a pressure transducer 78. The brake valve is electrically controlled and is branched on the line 58 connected to the auxiliary reservoir 40. The brake valve 64 is normally closed and is connected to an electrically controlled brake-release valve 66 which is normally open. When the brake-release valve 66 is open, it puts the line 68 in communication with the atmosphere. A double stop valve 70 has a first inlet connected to the outlet 32 of the pneumatic section 24, a second inlet connected to the line 68 disposed downstream of the brake valve 64 and an outlet 72 connected to the line 46 which feeds the brake cylinders. A further pressure transducer 76 is connected to the outlet 32 of the pneumatic section 24. The pressure transducer 78 is connected downstream of the brake valve 64 and detects the pressure at the outlet of the valve assembly.

The valves of the electrically controlled section 26 are controlled by an electronic control unit (not shown) associated with the control system 18 which receives braking or brake-releasing commands from a remote unit 80 placed on the locomotive M (figure 1).

The central control unit 80 of the braking system can be associated with a radio transmitter which emits braking or brake-releasing commands in the form of radio signals which are picked up by receivers placed on the electronic units aboard the vehicles. Such radio signals are converted into electric signals for controlling the valves. The transducers 52, 76 and 78 detect the value of pressure in the corresponding points of the pneumatic circuit and send to the electronic control unit corresponding electric signals which are used by the control unit for varying the time of aperture of the valves 64, 66.

As an alternative to the radio transmission of the braking and brake-releasing signals, the commands could be transmitted via cable, by means of a serial bus which extends along all the vehicles of the train. Two independent busses could be provided, a first one dedicated to the transmission of braking and brake-releasing commands and the other one dedicated to the transmission of diagnostic information. In this case, in case of failure of the bus dedicated to the transmission of command signals, the second bus could be used for the transmission of the command signals, temporarily renouncing to the transmission of the diagnostic information.

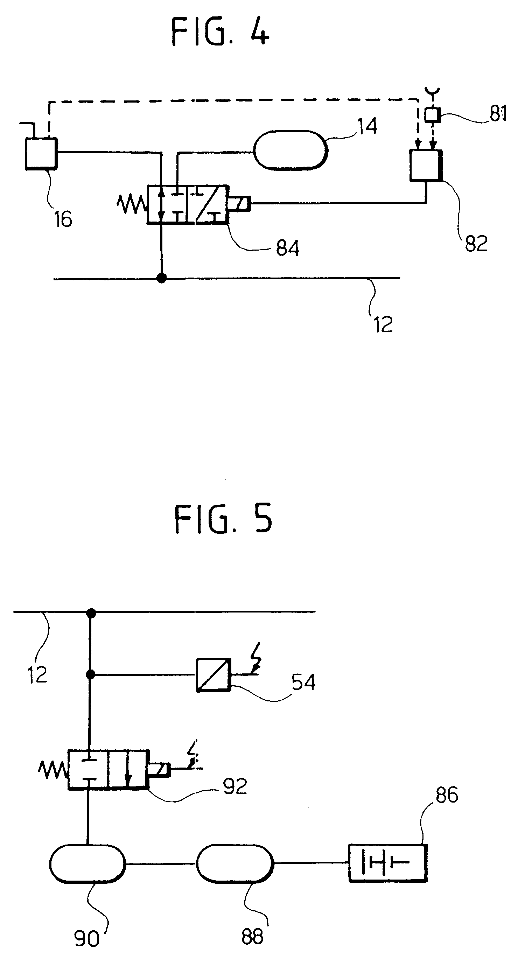

An important feature of the braking system according to the invention consists in that the same braking system can operated either with pneumatic control in accordance with U.I.C. standards or with electric control. With reference to figure 4, for activating the electrically controlled braking system it is necessary to turn the control cock 16 to an inoperative position and to manually operate a push-button 81. When both conditions are met (cock 16 turned-off and push-button 81 activated) a unit 82 operates a valve 84 which interrupts the connection between the cock 16 and the brake pipe 12 and connects the brake pipe 12 to the main reservoir 14 through a pressure control valve (not shown) calibrated, for instance, either at 7 bar or at 5 bar.

In the condition of electric braking, the braking commands are no more given through the control cock 16 but through the central control unit 80 of the braking system which is connected via radio or via cable to the control units of the individual control systems of the vehicles. When the control unit of a vehicle receives a braking command, it opens the brake valve 64 and at the same time closes the brake-release valve 66. The pneumatic control section 24 is either deactivated or inoperative when the pressure in the brake pipe 12 is equal to or higher than the pressure in the control reservoir 38. When the brake valve 64 is open, it puts the auxiliary reservoir 40 in communication with the brake cylinders through the lines 72 and 46. The signals provided by the transducer 78 allow the control unit to modulate the time of aperture of the valves 64, 66 for obtaining the desired value of the brake pressure. In the condition of brake-release, the valve 64 is closed and the brake-valve 66 is open, and in this condition the brake cylinders are therefore put in communication with the atmosphere through the lines 46, 72 and through the brake-release valve 66.

The same braking system can also operate with pneumatic control in accordance with the U.I.C. standards. For operating in this manner, it is sufficient to turn the lever of the control cock 16 to the pneumatic control position. The unit 82 brings back the valve 84 to its rest position in which it puts the control cock 16 in communication with the brake pipe 12. By operating the cock 16 a depression is produced in the brake pipe 12 which propagates from the locomotive to the last vehicle of the train. A drop of pressure in the brake pipe 12 automatically produces the intervention of the pneumatic control section 24 of each control system 18. When the pressure in the brake pipe 12 is lower than the pressure in the control reservoir 38, the pneumatic control section 24 puts the connection point 36 in communication with the outlet 32. A braking pressure is thereby produced, which is transmitted to the brake cylinders through the line 86, the double stop valve 70, the line 72 and the line 46. The transducer 76 detects the fact that the distributor 18 is in the pneumatic control condition. By comparing the values of pressure detected by the transducer 52 and 76 it is possible to obtain information about the correct operation of the pneumatic control section 24. The transducer 52 can also be used for carrying out the function of automatically determining the composition of the train, as disclosed in detail in EP-A-968 897 of the same Applicant.

With reference to figure 5, the electric power necessary for the operation of the electrically controlled section 26 comes from a battery 86 integrated or placed in close proximity to the control system 18. The battery 86 is charged by a small electric generator 88 driven by a small compressed air turbine 90. The pressure switch 54 enables the activation of the turbine 90 by activating a normally open valve 92 only when the pressure in the brake pipe is greater that 5.5 bar. As an alternative, the valve 92 can be manually operated.

In emergency braking conditions both the electric and the pneumatic control intervene at the same time. In emergency conditions, for accelerating the intervention of the pneumatic control section 24 the application valve 53 is opened and puts the brake pipe 12 directly in communication with the atmosphere.

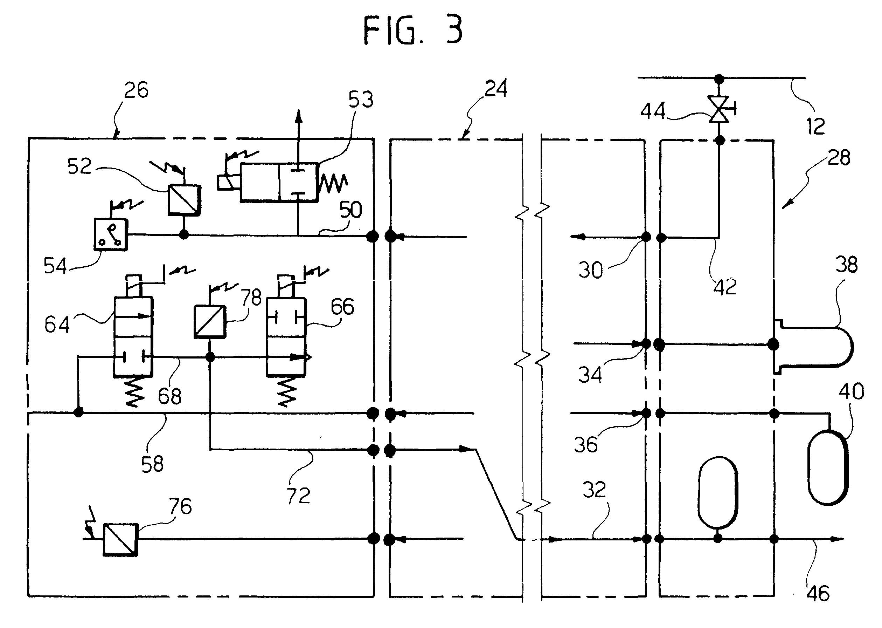

Figure 3 shows the pneumatic diagram of a variant of the control system according to the invention. The elements corresponding to those previously disclosed are indicated by the same numeral references. In this case, the electrically-controlled section 26 is housed in the cover of a standard U.I.C. distributor which forms the pneumatically controlled section 24. Therefore, the pneumatically controlled section is directly connected to the support 28 of the distributor, whereas the electrically controlled section 26 is housed in the cover of the distributor instead of being placed on an intermediate bracket.

With respect to the previous version, the pressure control valve 60 and the associated check valve 62 are missing from the electrically controlled section 26, the pneumatically controlled section 24 being realised so that the auxiliary reservoir 40 is filled at a pressure of 7 bar whereas the control reservoir 38 is filled at 5.4 bar. Compared to the pneumatic diagram disclosed with reference to figure 2, in the diagram of figure 3 also the double stop valve 70 is missing, since its functions are carried out by the pneumatically controlled section 24. The operation of this variant is substantially identical to that of the embodiment previously disclosed with reference to figure 2.

## Claims

1. A braking system for trackbound trains formed by a plurality of vehicles (M, V₁, V₂, V₃, ...Vₙ) coupled to each other, comprising:
- a main reservoir (14) for arranging on a vehicle (M),
- a brake pipe (12) which is suitable to extend along all the vehicles of the train,
- at least one auxiliary reservoir (40) filled at the pressure of the brake pipe (12) and at least one brake cylinder (22) for arranging on each vehicle, and
- at least one brake control system (18) for placing on each vehicle and connected to the brake pipe (12), to said auxiliary reservoir (40) and to said brake cylinder (22), each control system (18) comprising a pneumatically controlled section (24) adapted to put said auxiliary reservoir (40) in communication with said brake cylinder (22) when the pressure in the brake pipe (18) falls below the pressure in the auxiliary reservoir (40),
each control system (18) further comprising an electrically controlled section (26) adapted to put said auxiliary reservoir (40) in communication with said brake cylinder (22) after having received a braking electric signal independent of the pressure in the brake pipe (12),
characterized in that a control reservoir (38) filled at a pressure equal to or lower than the pressure in the brake pipe is provided for each vehicle, and in that it comprises a pressure control valve (60) placed between the brake pipe (12) and said control reservoir (38).

2. A braking system according to claim 1, characterized in that the electrically controlled section (26) comprises an electronic control unit designed for receiving via radio or via serial bus braking or brake-releasing commands coming from a remote control unit (80).

3. A braking system according to claim 1, characterized in that the electrically controlled section (26) of each control system (18) comprises at least one electrically controlled brake valve (64) and one electrically controlled brake-release valve (66), the aperture and closure of which are modulated by a control unit as a function of signals coming from a pressure transducer (78) placed downstream of the brake valve (64).

4. A braking system according to claim 1, characterized in that it comprises means (81, 84) provided for selecting either the pneumatically controlled or the electrically controlled operation of the braking system.

5. A braking system according to claim 1, characterized in that it comprises an electric source (86) associated with each control system (18) and pneumatically operated means (88, 90) for charging said power source (86).

6. A braking system according to claim 1, characterized in that the electrically controlled section (26) is placed on an intermediate bracket placed between a support (28) of the distributor and a U.I.C. standard pneumatic distributor which carries out the functions of said pneumatically controlled section (24).

7. A braking system according to claim 1, characterized in that said electrically controlled section (26) is placed in a cover of a standard U.I.C. pneumatic distributor which carries out the function of said pneumatically controlled section (24).

8. A braking system according to claim 1, characterized in that it comprises an electrically controlled valve (53) adapted to put the brake pipe (12) in communication with the atmosphere when said control system (18) receives an emergency braking command.

## Patentansprüche

1. Bremssystem für schienengebundene Züge, die durch mehrere, aneinander gekoppelte Fahrzeuge (M, V₁, V₂, V₃,...Vₙ) gebildet werden, umfassend:
- einen Hauptbehälter (14) zum Anordnen auf einem Fahrzeug (M),
- eine Bremsleitung (12), die geeignet ist, sich entlang aller Fahrzeuge des Zuges zu erstrecken,
- wenigstens einen Hilfsbehälter (40), der mit dem Druck der Bremsleitung (12) gefüllt ist und wenigstens einen Bremszylinder (22) zum Anordnen auf jedem Fahrzeug und
- wenigstens ein mit der Bremsleitung (12), dem Hilfsbehälter (40) und dem Bremszylinder (22) verbundenes Bremssteuersystem (18) zum Anordnen auf jedem Fahrzeug, wobei jedes Steuersystem (18) einen pneumatisch gesteuerten Abschnitt (24) umfasst, der angepaßt ist, um den Hilfsbehälter (40) mit dem Bremszylinder (22) in Verbindung zu bringen, sobald der Druck in der Bremsleitung (18) unter den Druck in dem Hilfsbehälter (40) fällt, wobei jedes Steuersystem (18) weiterhin einen elektrisch gesteuerten Abschnitt (26) umfasst, der angepaßt ist, um den Hilfsbehälter (40) mit dem Bremszylinder (22) in Verbindung zu bringen, nachdem ein von dem Druck in der Bremsleitung (12) unabhängiges, elektrisches Bremssignal empfangen wurde,
dadurch gekennzeichnet, dass ein Steuerbehälter (38), der mit einem Druck gefüllt ist, der gleich oder kleiner als der Druck in der Bremsleitung ist, für jedes Fahrzeug bereitgestellt ist, und dass es ein Drucksteuerungsventil (60) umfasst, das zwischen der Bremsleitung (12) und dem Steuerbehälter (38) angeordnet ist.

2. Bremssystem gemäß Anspruch 1, dadurch gekennzeichnet, dass der elektrisch gesteuerte Abschnitt (26) eine elektronische Steuereinheit aufweist, die bestimmt ist, über Funk oder Mehrfachleitung Bremsbefehle oder Befehle zum Lösen der Bremse zu empfangen, die von einer Fernsteuerungseinheit (80) ausgehen.

3. Bremssystem gemäß Anspruch 1, dadurch gekennzeichnet, dass der elektrisch gesteuerte Abschnitt (26) jedes Steuersystems (18) wenigstens ein elektrisch gesteuertes Bremsventil (64) und ein elektrisch gesteuertes Ventil (66) zum Lösen der Bremse umfasst, deren Öffnen und Schließen durch eine Steuereinheit als eine Funktion von Signalen moduliert werden, die von einem dem Bremsventil (64) nachgeschalteten Druckwandler (78) kommen.

4. Bremssystem gemäß Anspruch 1, dadurch gekennzeichnet, dass es Mittel (81, 84) umfasst, die bereitgestellt werden, um entweder den pneumatisch gesteuerten oder elektrisch gesteuerten Betrieb des Bremssystems auszuwählen.

5. Bremssystem gemäß Anspruch 1, dadurch gekennzeichnet, dass es eine elektrische Quelle (86), die mit jedem Steuersystem (18) verbunden ist, und pneumatisch betriebene Mittel (88, 90) zum Aufladen der Energiequelle (86) umfasst.

6. Bremssystem gemäß Anspruch 1, dadurch gekennzeichnet, dass der elektrisch gesteuerte Abschnitt (26) auf einem Zwischenträger angeordnet ist, der zwischen einer Unterstützung (28) des Verteilers und einem pneumatischen Verteiler nach U.I.C.-Standard angeordnet ist, der die Funktionen des pneumatisch gesteuerten Abschnitts (24) ausführt.

7. Bremssystem gemäß Anspruch 1, dadurch gekennzeichnet, dass der elektrisch gesteuerte Abschnitt (26) in einer Abdeckung eines pneumatischen Verteilers nach U.I.C.-Standard angeordnet ist, der die Funktion des pneumatisch gesteuerten Abschnitts (24) ausführt.

8. Bremssystem gemäß Anspruch 1, dadurch gekennzeichnet, dass es ein elektrisch gesteuertes Ventil (53) umfasst, das angepaßt ist, um die Bremsleitung (12) mit der Atmosphäre in Verbindung zu bringen, sobald das Steuersystem (18) einen Befehl zur Notbremsung empfängt.

## Revendications

1. Système de freinage pour trains sur rail formés d'une pluralité de véhicules (M, V₁, V₂, V₃, ..., Vₙ) couplés l'un à l'autre, comprenant :
- un réservoir principal (14) à agencer sur un véhicule (M),
- une conduite de frein (12) prévue pour s'étendre le long de tous les véhicules du train,
- au moins un réservoir auxiliaire (40) rempli à la pression de la conduite de frein (12) et au moins un cylindre de frein (22) à agencer sur chaque véhicule, et
- au moins un système de commande de frein (18) à placer sur chaque véhicule et raccordé à la conduite de frein (12), audit réservoir auxiliaire (40) et audit cylindre de frein (22), chaque système de commande (18) comprenant une section à commande pneumatique (24) qui est à même de mettre ledit réservoir auxiliaire (40) en communication avec ledit cylindre de frein (22) lorsque la pression dans la conduite de frein (18) tombe en dessous de la pression dans le réservoir auxiliaire (40),
- chaque système de commande (18) comprenant par ailleurs une section à commande électrique (26) susceptible de mettre ledit réservoir auxiliaire (40) en communication avec ledit cylindre de frein (22) après avoir reçu un signal électrique de freinage indépendamment de la pression dans la conduite de frein (12),
caractérisé en ce qu'un réservoir de commande (38) rempli à pression égale ou inférieure à la pression dans la conduite de frein est prévu pour chaque véhicule et en ce qu'il comprend une vanne de commande de pression (60) placée entre la conduite de frein (12) et ledit réservoir de commande (38).

2. Système de freinage selon la revendication 1, caractérisé en ce que la section à commande électrique (26) comprend une unité de commande électronique conçue pour recevoir par radio ou via un bus sériel des ordres de freinage ou de libération de frein provenant d'une unité de télécommande (80).

3. Système de freinage selon la revendication 1, caractérisé en ce que la section à commande électrique (26) de chaque système de commande (18) comprend au moins une vanne de frein à commande électrique (64) et une vanne de libération de frein à commande électrique (66), dont l'ouverture et la fermeture sont modulées par une unité de commande en fonction de signaux provenant d'un transducteur de pression (78) placé en aval de la vanne de frein (64).

4. Système de freinage selon la revendication 1, caractérisé en ce qu'il comprend des moyens (81, 94) prévus pour sélectionner le fonctionnement par commande pneumatique ou le fonctionnement par commande électrique du système de freinage.

5. Système de freinage selon la revendication 1, caractérisé en ce qu'il comprend une source d'électricité (86) associée à chaque système de commande (18) et des moyens à commande pneumatique (88, 90) pour charger ladite source d'énergie (86).

6. Système de freinage selon la revendication 1, caractérisé en ce que la section à commande électrique (26) est placée sur une potence intermédiaire disposée entre un support (28) du distributeur et un distributeur pneumatique standard U.I.C. qui effectue les fonctions de ladite section à commande pneumatique (24).

7. Système de freinage selon la revendication 1, caractérisé en ce que ladite section à commande électrique (26) est placée dans un couvercle d'un distributeur pneumatique standard U.I.C. qui assure la fonction de ladite section à commande électrique (24).

8. Système de freinage selon la revendication 1, caractérisé en ce qu'il comprend une vanne à commande électrique (53) qui est à même de mettre la conduite de frein (12) en communication avec l'atmosphère lorsque ledit système de commande (18) reçoit un ordre de freinage d'urgence.
